# EUROPÄISCHE PATENTSCHRIFT

(11) **EP 1 506 896 B1**
(45) Veröffentlichungstag und Bekanntmachung des Hinweises auf die Patenterteilung: **11.05.2011**
(21) Anmeldenummer: 03018314.9
(22) Anmeldetag: 12.08.2003
(51) Int. Cl.: B60R 21/20

(54) **Luftsackmodul**
Airbag module
Module d'airbag

(43) Veröffentlichungstag der Anmeldung: 16.02.2005
(73) Patentinhaber: Autoliv Development AB, 447 83 Vårgårda (SE)
(72) Erfinder: Ortmann, Sven, 15370 Fredersdorf (DE)
(74) Vertreter: Schön, Thilo

(56) Entgegenhaltungen:
- DE-A- 4 139 451
- GB-A- 2 376 923
- US-A- 5 064 218
- US-A- 5 427 406
- US-A- 5 634 658
- PATENT ABSTRACTS OF JAPAN vol. 1998, no. 11, 30. September 1998 (1998-09-30) -& JP 10 157559 A (TOKAI RIKA CO LTD), 16. Juni 1998 (1998-06-16)

## Beschreibung

Die Erfindung betrifft ein Luftsackmodul für Kraftfahrzeuge, das einen Luftsack mit einer einen Einblasmund aufweisenden Luftsackhülle, einen Gasgenerator und einen Träger zur Halterung des Luftsacks und des Gasgenerators umfasst.

Derartige Luftsackmodule sind grundsätzlich bekannt und dienen zum Schutz des oder der Fahrzeuginsassen bei einem Frontal- oder Seitenaufprall des Kraftfahrzeuges. Siehe z.B. Druckschrift JP-A-10157559 die einen Luftsackmodul gemäß dem Oberbegriff des Anspruchs 1 beschreibt.

Nachteilig bei bekannten Luftsackmodulen ist jedoch, dass die Befestigung des Luftsacks und des Gasgenerators am Träger durch Schraubverbindungen oder andere separate Befestigungsmittel realisiert ist, wobei zum Teil zusätzliche Haltebauteile wie z.B. Haltebleche verwendet werden. Derartige Verbindungen sind insbesondere deshalb von Nachteil, da sie eine aufwendige Montage, beispielsweise die Kontrolle des Anzugmomentes bei der Verschraubung, bedingen und zusätzliche Bauteile erfordern.

Es ist das der Erfindung zugrunde liegende Problem (Aufgabe), ein Luftsackmodul der eingangs genannten Art zu schaffen, bei dem eine einfache Montage ermöglicht und gleichzeitig eine zuverlässige und sichere Funktionsweise gewährleistet ist, wobei insbesondere die Anzahl erforderlicher Einzelteile möglichst gering gehalten werden soll.

Die Lösung dieser Aufgabe erfolgt durch die Merkmale des Anspruchs 1 und insbesondere dadurch, dass bei zusammengesetztem Modul der Gasgenerator über wenigstens einen über eine im Träger ausgebildete Öffnung hinaus vorstehenden Befestigungsabschnitt mit dem Träger verbunden ist, wobei der den Einblasmund des Luftsacks begrenzende Randbereich der Luftsackhülle zumindest bereichsweise zwischen dem Befestigungsabschnitt des Gasgenerators und dem Träger eingeklemmt ist.

Bei dem erfindungsgemäßen Luftsackmodul ist vorgesehen, dass der Gasgenerator einen Befestigungsabschnitt aufweist, der über eine im Träger ausgebildete Öffnung hinaus vorsteht, so dass der Gasgenerator allenfalls teilweise durch die im Träger ausgebildete Öffnung hindurchführbar ist, und über den der Gasgenerator mit dem Träger verbunden ist. Der den Einblasmund des Luftsacks begrenzende Randbereich der Luftsackhülle ist zumindest bereichsweise zwischen dem Befestigungsabschnitt und dem mit dem Befestigungsabschnitt verbundenen Träger eingeklemmt.

Das erfindungsgemäße Luftsackmodul zeichnet sich vor allem dadurch aus, dass auf ein zusätzliches Halteelement verzichtet werden kann, da zur Halterung des Luftsacks lediglich der Träger und der Gasgenerator zusammenwirken, um den Randbereich der Luftsackhülle einzuklemmen.

Vorteilhafte Ausführungsformen der Erfindung sind in den Unteransprüchen, der Beschreibung und der Zeichnung angegeben.

Der Gasgenerator kann gemäß einem bevorzugten Ausführungsbeispiel aus einer vorgegebenen, mit dem Träger ausgerichteten Ausgangsstellung durch eine Verstellbewegung, insbesondere eine Drehbewegung, in eine mit dem Träger verbundene Endstellung überführbar sein. Die Verstellbewegung kann dazu genutzt werden, ohne zusätzliche Befestigungsmittel und Werkzeuge eine sichere und feste Verbindung zwischen dem Träger und dem Gasgenerator herzustellen.

Gemäß einer vorteilhaften Weiterbildung der Erfindung kann der Gasgenerator über den Befestigungsabschnitt nach Art eines Bajonett-, Schnapp- und/oder Rastverschlusses mit dem Träger verbunden sein. Hierdurch kann auf besonders einfache Weise erreicht werden, dass der den Einblasmund des Luftsacks begrenzende Randbereich der Luftsackhülle ohne die Verwendung einer Schraub- oder einer anderen separate Befestigungsmittel erfordernden Verbindung zwischen dem Befestigungsabschnitt des Gasgenerators und dem Träger eingeklemmt werden kann.

Dies ermöglicht insbesondere eine Reduktion der zur Herstellung der Verbindung notwendigen Bauteile. Beispielsweise kann auf die bei bekannten Luftsackmodulen verwendeten Schrauben und Muttern verzichtet und eine Kostenreduktion erreicht werden. Außerdem kann auf diese Weise die Montage des Luftsackmoduls vereinfacht werden.

Eine weitere vorteilhafte Ausführungsform zeichnet sich dadurch aus, dass der Gasgenerator teilweise durch die Öffnung im Träger hindurch geführt ist. Hierdurch ist es möglich, dass ein Teil des Gasgenerators durch den Einblasmund der Luftsackhülle in den Luftsack eingeführt werden kann. Die Einführtiefe des Gasgenerators in den Luftsack kann beispielsweise durch die Bauhöhe des Gasgenerators und/oder die axiale Lage des Befestigungsabschnittes am Gasgenerator eingestellt werden.

Des Weiteren kann erfindungsgemäß vorgesehen sein, dass der Befestigungsabschnitt einen vom Gasgenerator radial abstehenden, insbesondere umlaufenden Flansch und wenigstens eine vom Gasgenerator radial abstehende Befestigungslasche umfasst, wobei die Befestigungslasche zur Befestigung des Gasgenerators am Träger vorgesehen und die Luftsackhülle zwischen dem Flansch und dem Träger eingeklemmt ist.

Vorzugsweise ist vorgesehen, dass der den Einblasmund begrenzende Randbereich der Luftsackhülle an einem Haltering angebracht ist, der zwischen dem Befestigungsabschnitt des Gasgenerators und dem Träger eingeklemmt ist. Hierbei kann der Randbereich der Luftsackhülle zusammen mit dem Haltering zwischen dem Befestigungsabschnitt des Gasgenerators und dem Träger eingeklemmt werden, wodurch der Randbereich der Luftsackhülle auf einfache Weise und gleichzeitig sicher und zuverlässig zwischen dem Träger und dem Gasgenerator gehalten werden kann. Der Haltering stellt sicher, dass die Klemmkraft über den gesamten Umfang auf den Randbereich der Luftsackhülle übertragen wird.

Der Durchmesser des Halterings kann größer sein als der Durchmesser der Öffnung im Träger. Der Haltering kann insbesondere aus Kunststoff gefertigt sein.

Dabei ist bevorzugt vorgesehen, dass der Haltering in die Luftsackhülle eingenäht und/oder eingestülpt ist. Eine sichere Verbindung zwischen Luftsackhülle und Haltering kann so bereits in einem Vormontagezustand sichergestellt werden.

Der Haltering kann Bestandteil zumindest einer Positionierhilfe zur korrekten Ausrichtung des Trägers und/oder des Gasgenerators relativ zum Luftsack sein. Hierdurch wird das Zusammensetzen des Luftsackmoduls erleichtert und insbesondere eine korrekte Orientierung des Trägers und/oder des Gasgenerators bezüglich des Luftsacks sichergestellt.

Die Positionierhilfe kann zumindest ein am Haltering ausgebildetes, insbesondere stiftartiges Positionierelement und zumindest eine am Träger und/oder Gasgenerator ausgebildete Aussparung umfassen, in die das Positionierelement bei korrekter Ausrichtung eingreift.

Um mit dem Haltering gleichzeitig sowohl den Träger als auch den Gasgenerator relativ zum Luftsack korrekt ausrichten zu können, ist es weiterhin bevorzugt, dass ein mit dem Träger zusammenwirkendes Positionierelement in eine axiale Richtung und ein mit dem Gasgenerator zusammenwirkendes Positionierelement in die entgegengesetzte axiale Richtung weist.

Eine am Gasgenerator ausgebildete Aussparung für das Positionierelement kann eine zum Verbinden des Gasgenerators mit dem Träger dienende Verstellbewegung des Gasgenerators relativ zu dem Positionierelement zulassen und vorzugsweise als Langloch ausgebildet sein.

Nach einer weiteren vorteilhaften Ausführungsform kann eine Rastvorrichtung vorgesehen sein, die bei korrekt zusammengesetztem Modul den Gasgenerator in einer mit dem Träger verbundenen Endstellung sichert. Hierdurch kann erreicht werden, dass auch nach dem Zusammensetzen des Luftsackmoduls, insbesondere für und nach dessen Montage in einem Kraftfahrzeug, der Gasgenerator in der mit dem Träger verbundenen Endstellung verbleibt.

Die Rastvorrichtung kann zumindest ein am Träger angebrachtes Rastelement, insbesondere eine Balkenfeder, und eine im Befestigungsabschnitt des Gasgenerators ausgebildete Rastöffnung umfassen, in die bei korrekt zusammengesetztem Modul das Rastelement eingerastet ist.

Nach einer weiteren Ausbildung der Erfindung kann der Gasgenerator durch die Rückstellkraft wenigstens eines Federelementes des Trägers spielfrei gehalten sein, das bei mit dem Träger verbundenem Gasgenerator durch den Gasgenerator ausgelenkt ist. Das Auftreten störender Klappergeräusche wird hierdurch vermieden.

Um das Gewicht des Luftsackmoduls möglichst gering zu halten, kann der Träger aus Kunststoff gefertigt sein. Die erfindungsgemäße Befestigung von Luftsack, Gasgenerator und Träger aneinander erfordert aufgrund ihrer schrauben- bzw. befestigungsmittellosen Ausgestaltung außerdem in vorteilhafter Weise keinen aus Metall hergestellten Träger.

Nachfolgend wird die Erfindung rein beispielhaft anhand einer vorteilhaften Ausführungsform und unter Bezugnahme auf die beigefügte Zeichnung beschrieben. Es zeigen:
- Fig. 1: eine perspektivische Ansicht eines noch nicht zusammengesetzten erfindungsgemäßen Luftsackmoduls mit einem Gasgenerator, einem Träger und einem Haltering, an dem ein den Einblasmund begrenzender Bereich einer Luftsackhülle angebracht ist,
- Fig. 2: eine Ansicht des Luftsackmoduls von Fig. 1 im zusammengesetzten Zustand,
- Fig. 3a und 3b: vereinfacht dargestellte Querschnitte des Luftsackmoduls entlang der Linien A - A und B - B in Fig. 2, und
- Fig. 4a - 4c: perspektivische Ansichten während des Zusammensetzens des Luftsackmoduls von Fig. 1.

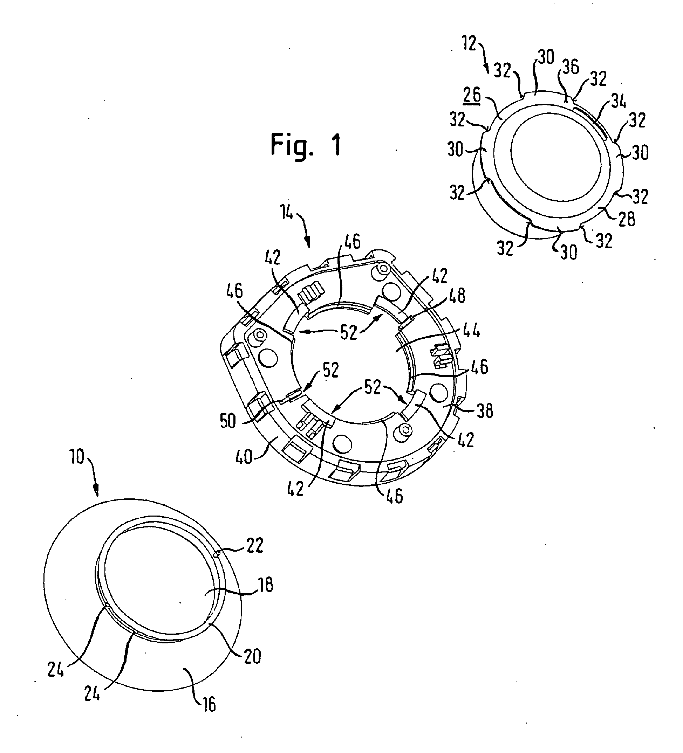

Das in Fig. 1 gezeigte erfindungsgemäße Luftsackmodul weist einen Luftsack 10, einen Gasgenerator 12 und einen zur Halterung des Luftsacks 10 und des Gasgenerators 12 vorgesehenen Träger 14 auf, wobei das Luftsackmodul in einem noch nicht zusammengesetzten Zustand dargestellt ist.

Der Luftsack 10 umfasst eine Luftsackhülle 16 und einen in der Luftsackhülle 16 ausgebildeten Einblasmund 18, wobei in Fig. 1 lediglich der den Einblasmund 18 begrenzende Bereich der Luftsackhülle 16 dargestellt ist.

Der den Einblasmund 18 begrenzende Bereich der Luftsackhülle 16 ist an einem kreisförmigen, aus Kunststoff gefertigten Haltering 20 angebracht. Der Haltering 20 ist in die Luftsackhülle 16 eingenäht, so dass eine sichere Verbindung zwischen der Luftsackhülle 16 und dem Haltering 20 gewährleistet ist. Grundsätzlich kann der Randbereich der Luftsackhülle 16 jedoch auch auf andere Weise an dem Haltering 20 befestigt werden. Insbesondere kann der Haltering 20 in die Luftsackhülle 16 eingestülpt oder eingewickelt sein.

Um beim Zusammensetzen des Luftsackmoduls den Gasgenerator 12 korrekt bezüglich des Luftsacks 10 zu orientieren, weist der Haltering 20 ein stiftförmiges erstes Positionierelement 22 auf, welches in die dem Luftsack 10 entgegengesetzt orientierte axiale Richtung weist. Das erste Positionierelement 22 ist Teil einer an anderer Stelle näher erläuterten ersten Positionierhilfe.

Um beim Zusammensetzen des Luftsackmoduls auch den Träger 14 korrekt bezüglich des Luftsacks 10 zu orientieren, sind an dem Haltering 20 weiterhin zweite Positionierelemente 24 vorgesehen, die ebenfalls stiftförmig ausgebildet sind. Die zweiten Positionierelemente 24 sind Teil einer an anderer Stelle näher erläuterten zweiten Positionierhilfe und dem ersten Positionierelement 22 entgegengesetzt orientiert, d.h. sie weisen in die gleiche axiale Richtung wie der Luftsack 10.

Der eine zylindrische Grundform aufweisende Gasgenerator 12 ist im Bereich seines einen Endes mit einem radial abstehenden Befestigungsabschnitt 26 versehen, der einen umlaufenden Flansch 28 und radial über den Flansch 28 hinaus vorstehende Befestigungslaschen 30 umfasst, die sich nach außen leicht verjüngen, so dass an den Befestigungslaschen 30 Schrägen 32 ausgebildet sind.

Zwischen zwei der Befestigungslaschen 30 ist in dem umlaufenden Flansch 28 eine erste Aussparung 34 in Form eines Langlochs vorgesehen, in welches der erste Positionierstift 22 des Halterings 20 eingreifen kann, um beim Zusammensetzen des Luftsackmoduls den Gasgenerator 12 korrekt bezüglich des Luftsacks 10 zu orientieren. Die erste Aussparung 34 und das erste Positionierelement 22 sind jeweils Teil der ersten Positionierhilfe. Die erste Aussparung ist als Langloch 34 ausgebildet, um eine während des Zusammensetzens des Luftsackmoduls noch näher zu erläuternde notwendige Verstellbewegung des Flansches 28 relativ zu dem ersten Positionierelement 22 zu erlauben.

Um bei zusammengesetztem Modul den Gasgenerator 12 in einer mit dem Träger 14 verbundenen Endstellung zu sichern, ist in einer der Befestigungslaschen 30 eine Rastöffnung 36 vorgesehen, die Teil einer an anderer Stelle näher erläuterten Rastvorrichtung ist.

Der aus Kunststoff gefertigte Träger 14 umfasst einen Trägerboden 38 und eine Trägerwand 40. Zur Befestigung des Gasgenerators 12 am Träger 14 sind Trägerlaschen 42 vorgesehen, wobei die Anzahl der Trägerlaschen 42 der Anzahl der Befestigungslaschen 30 entspricht. Bei zusammengesetztem Modul greifen die Befestigungslaschen 30 unter die Trägerlaschen 42.

Der Träger 14 weist eine im Trägerboden 38 zum Hindurchführen des Gasgenerators 12 vorgesehene kreisförmige Öffnung 44 auf, deren Durchmesser durch eine am Trägerboden 38 ausbildete, im Querschnitt L-förmig radial nach innen vorstehende und im Bereich der Trägerlaschen 42 unterbrochene Klemmstufe 46 bestimmt und kleiner ist als der des Halterings 20. Die Klemmstufe 46 dient als Auflage für den Haltering 20.

Zum Sichern des Gasgenerators 12 in der bei zusammengesetztem Modul mit dem Träger 14 verbundenen Endstellung ist am Träger 14 ein als Balkenfeder 48 ausgeführtes Rastelement vorgesehen. Die Balkenfeder 48 weist an ihrem freien Ende eine nach oben abstehende Rastnase auf, die bei zusammengesetztem Modul in die Rastöffnung 36 der einen Befestigungslasche 30 des Gasgenerators 12 einrastet, wobei das Rastelement 48 und die Rastöffnung 36 jeweils Teil der vorstehend bereits erwähnten Rastvorrichtung sind.

Um den Gasgenerator 12 in der mit dem Träger 14 verbundenen Endstellung spielfrei zu halten, ist ein am Träger 14 ausgebildetes, radial nach innen gerichtetes Federelement 50 vorgesehen, das bei zusammengesetztem Modul durch den Gasgenerator 12 ausgelenkt wird und den Gasgenerator 12 in der Endstellung spielfrei hält.

Der Träger 14 weist in den Bereichen der Trägerlaschen 42 breite zweite Aussparungen 52 und im Bereich des Federelements 50 eine schmale zweite Aussparung 52 auf, wobei die zweiten Aussparungen 52 die Klemmstufe 46 jeweils unterbrechen. Beim Zusammensetzen des Luftsackmoduls greift einer der beiden zweiten Positionierstifte 24 in die schmale zweite Aussparung 52 und der andere der beiden Positionierstifte 24 in die der schmalen zweiten Aussparung 52 nächstliegende breite zweite Aussparung 52 ein, so dass lediglich eine einzige korrekte Orientierung des Trägers 14 bezüglich des Luftsacks 10 möglich ist. Die zweiten Positionierstifte 24 und die beiden mit den zweiten Positionierstiften 24 zusammenwirkenden zweiten Aussparungen 52 sind jeweils Teil der vorstehend bereits erwähnten zweiten Positionierhilfe.

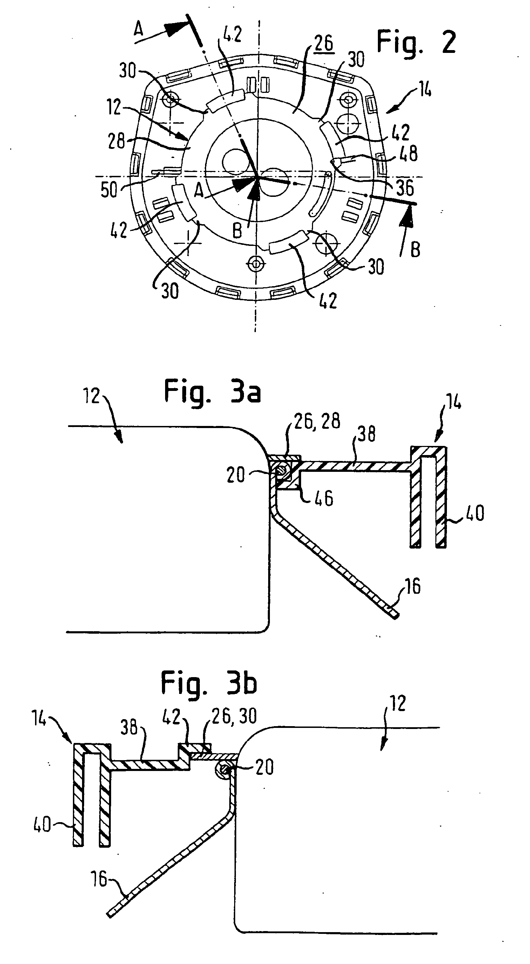

Fig. 2 zeigt das zusammengesetzte Luftsackmodul, wobei lediglich der Gasgenerator 12 und der Träger 14 dargestellt sind. Der Gasgenerator 12 ist teilweise durch die Öffnung 44 im Träger 14 hindurchgeführt, wobei der Flansch 28 und die Befestigungslaschen 30 des Gasgenerators 12 über die im Träger 14 ausgebildete Öffnung 44 und die Klemmstufe 46 hinaus vorstehen. Der Luftsack 10 und der Haltering 12 sind in Fig. 2 durch den Befestigungsabschnitt 26 des Gasgenerators 12 verdeckt.

Im zusammengesetzten Zustand greifen die Befestigungslaschen 30 unter die Trägerlaschen 42. Die Rastnase des Rastelements 48 greift in die Rastöffnung 36 verriegelnd ein und das Federelement 50 ist durch eine der Befestigungslaschen 30 des Gasgenerators 12 seitlich ausgelenkt.

Die Fig. 3a und 3b zeigen vereinfacht dargestellte Querschnitte des zusammengesetzten Luftsackmoduls entlang der Linien B - B und A - A in Fig. 2, wobei die Linie B - B (Fig. 3a) den Gasgenerator 12 im Bereich des Flansches 28 und die Linie A - A (Fig. 3b) den Gasgenerator 12 im Bereich einer der Befestigungslaschen 30 schneidet. In Fig. 3a wurde der Einfachheit halber auf die Darstellung des Langlochs 34 verzichtet.

Der in Fig. 3a mit der doppelwandigen Trägerwand 40 dargestellte Träger 14 ist in dem die Öffnung begrenzenden Randbereich des Trägerbodens 38 mit der eine Auflageschulter für den Haltering 20 bildenden Klemmstufe 46 versehen. Der Haltering 20 und der den Einblasmund begrenzende Randbereich der Luftsackhülle 16 sind zwischen dem umlaufenden Flansch 28 des Gasgenerators 12 und der Klemmstufe 46 des Träger 14 eingeklemmt.

In dem in Fig. 3b dargestellten Umfangsbereich erfolgt keine Klemmung des Halterings 20 bzw. des Randbereichs der Luftsackhülle 16. Die Befestigungslasche 30 des Gasgenerators 12 greift unter die Trägerlasche 42 des Trägers 14, so dass der Gasgenerator 12 an dem Träger 14 in axialer Richtung verriegelt ist.

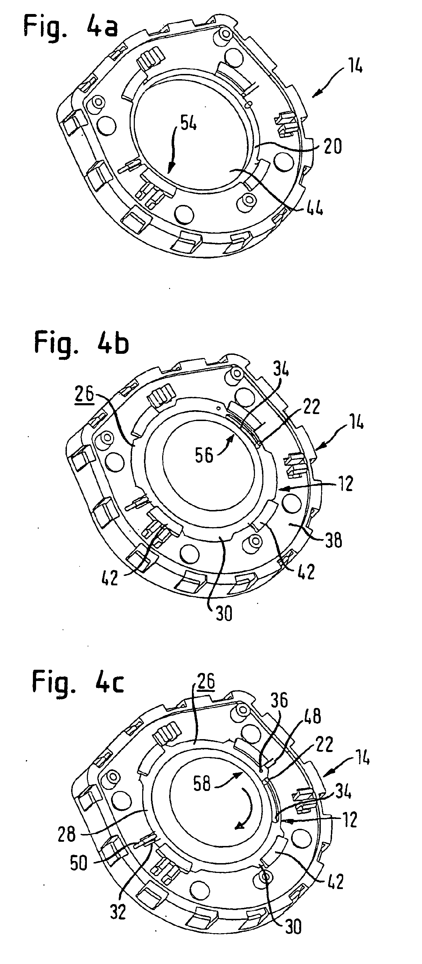

Nachfolgend wird der Zusammenbau des in den Fig. 1, 2 und 3 dargestellten Luftsackmoduls unter zusätzlicher Bezugnahme auf die Fig. 4a - 4c beschrieben, wobei davon ausgegangen wird, dass der Haltering 20 bereits in den Randbereich der Luftsackhülle 16 eingenäht ist.

Zunächst wird der in den Randbereich der Luftsackhülle 16 eingenähte Haltering 20 gemäß Fig. 4a auf die Klemmstufe 46 des Trägers 12 gelegt.

Durch die zweite Positionierhilfe 54, die die am Haltering 20 ausgebildeten zweiten Positionierstifte 24 und die zweiten Aussparungen 52 des Trägers 14 umfasst (vgl. Fig. 1), wird die korrekte Ausrichtung des Trägers 14 relativ zum Haltering 20 und damit zum Luftsack 10 sichergestellt. Aufgrund der perspektivischen Ansicht in Fig. 4a sind die zweiten Positionierelemente 24 und die für die zweite Positionierhilfe 54 maßgeblichen zweiten Aussparungen 52 durch den Haltering 20 und den Träger 14 verdeckt.

Der Gasgenerator 12 wird dann mit seinem vom Befestigungsabschnitt 26 entfernten Ende voran durch die in Fig. 4a dargestellte Öffnung 44 im Träger 14 gesteckt, bis der Befestigungsabschnitt 26 mit dem Flansch 28 am Trägerboden 38 zur Anlage kommt (Fig. 4b).

Die das am Haltering 20 ausgebildete erste Positionierelement 22 und das im Flansch 28 des Gasgenerators 12 vorgesehene Langloch 34 umfassende erste Positionierhilfe 56 ermöglicht dabei die korrekte Ausrichtung des Gasgenerators 12 relativ zum Luftsack 10, da das erste Positionierelement 22 nur bei korrekter Ausrichtung in das Langloch 34 eingreifen kann. Der Gasgenerator 12 ist dabei derart ausgerichtet, dass die Befestigungslaschen 30 jeweils eine Ausgangsstellung zwischen zwei Trägerlaschen 42 einnehmen.

Schließlich wird der Gasgenerator 12 aus der Ausgangsstellung gemäß Fig. 4b durch eine Drehbewegung in eine am Träger 14 verriegelte und gesicherte Endstellung überführt, wie in Fig. 4c durch einen Pfeil veranschaulicht ist, wobei das das erste Positionierelement 22 aufnehmende Langloch 34 des Gasgenerators 12 die Verstellbewegung zulässt. Die Befestigungslaschen 30 des Gasgenerators 12 schieben sich dabei unter die Trägerlaschen 42 des Trägers 12, so dass der Gasgenerator 12 axial gesichert ist.

Durch dieses Zusammenwirken der Befestigungslaschen 30 mit den Trägerlaschen 42 ist der Gasgenerator 12 über den Befestigungsabschnitt 26 nach Art eines Bajonettverschlusses mit dem Träger 14 verbunden, wobei der Haltering 20 mit dem den Einblasmund 18 begrenzenden Randbereich der Luftsackhülle 16 zwischen dem umlaufenden Flansch 28 und dem Träger 14 eingeklemmt ist.

Während der Drehbewegung des Gasgenerators 12 wird die Rastnase der Balkenfeder 48 zunächst von dem umlaufenden Flansch 28 überfahren. In der Endstellung gemäß Fig. 4c springt die Rastnase dann von unten in die Rastöffnung 36 des Flansches 28, wodurch die Endstellung des Gasgenerators 12 gegen Verdrehen gesichert ist. Die Rastöffnung 36 des Gasgenerators 12 und die Balkenfeder 48 des Trägers 14 bilden die vorstehend bereits erwähnte Rastvorrichtung 58.

Gegen Ende der Drehbewegung des Gasgenerators 12 wird das Federelement 50 des Trägers 14 durch eine Schräge 32 einer Befestigungslasche 30 seitlich ausgelenkt, so dass der Gasgenerator 12 in seiner durch die Rastöffnung 36 und die Balkenfeder 48 gesicherten Endstellung aufgrund der Rückstellkraft des Federelements 50 klapperfrei zwischen dem Federelement 50 und der Balkenfeder 48 des Trägers 14 eingespannt ist.

Die Montage des erfindungsgemäßen Luftsackmoduls ist folglich auf besonders einfache Weise und ohne separate Befestigungsmittel möglich, wobei zusätzlich der Vorteil erzielt wird, dass der Träger 14 gewichtsreduzierend aus Kunststoff gefertigt werden kann.

### Bezugszeichenliste

- 10: Luftsack
- 12: Gasgenerator
- 14: Träger
- 16: Luftsackhülle
- 18: Einblasmund
- 20: Haltering
- 22: erstes Positionierelement
- 24: zweites Positionierelement
- 26: Befestigungsabschnitt
- 28: Flansch
- 30: Befestigungslasche
- 32: Schräge
- 34: erste Aussparung
- 36: Rastöffnung
- 38: Trägerboden
- 40: Trägerwand
- 42: Trägerlasche
- 44: Öffnung
- 46: Klemmstufe
- 48: Rastelement
- 50: Federelement
- 52: zweite Aussparung
- 54: zweite Positionierhilfe
- 56: erste Positionierhilfe
- 58: Rastvorrichtung

## Patentansprüche

1. Luftsackmodul für Kraftfahrzeuge, das einen Luftsack (10) mit einer einen Einblasmund (18) aufweisenden Luftsackhülle (16), einen Gasgenerator (12) und einen Träger (14) zur Halterung des Luftsacks (10) und des Gasgenerators (12) umfasst,
wobei bei zusammengesetztem Modul der Gasgenerator (12) über wenigstens einen über eine im Träger (14) ausgebildete Öffnung (44) hinaus vorstehenden Befestigungsabschnitt (26) mit dem Träger (14) verbunden ist, wobei der den Einblasmund (18) begrenzende Randbereich der Luftsackhülle (16) an einem Haltering (20) angebracht ist, der zwischen dem Befestigungsabschnitt (26) des Gasgenerators (12) und dem Träger (14) eingeklemmt ist,
wobei der Gasgenerator (12) aus einer vorgegebenen, mit dem Träger (14) ausgerichteten Ausgangsstellung durch eine Drehbewegung, in eine mit dem Träger (14) verbundene Endstellung überführbar ist,
**dadurch gekennzeichnet,**
**dass** der Haltering (20) Bestandteil zumindest einer Positionierhilfe (54, 56) zur korrekten Ausrichtung des Trägers (14) und/oder des Gasgenerators (12) relativ zum Luftsack (10) ist, wobei die Positionierhilfe zumindest ein am Haltering (20) ausgebildetes, insbesondere stiftartiges Positionierelement (22, 24) und zumindest eine am Träger (14) und/oder Gasgenerator (12) ausgebildete Aussparung (34, 52) umfasst, in die das Positionierelement (22, 24) bei korrekter Ausrichtung eingreift.

2. Luftsackmodul nach Anspruch 1,
**dadurch gekennzeichnet,**
**dass** der Gasgenerator (12) über den Befestigungsabschnitt (26) nach Art eines Bajonett-, Schnapp- und/oder Rastverschlusses mit dem Träger (14) verbunden ist.

3. Luftsackmodul nach einem der vorhergehenden Ansprüche,
**dadurch gekennzeichnet,**
**dass** der Gasgenerator (12) teilweise durch die Öffnung (44) im Träger (14) hindurchgeführt ist.

4. Luftsackmodul nach einem der vorhergehenden Ansprüche,
**dadurch gekennzeichnet,**
**dass** der Befestigungsabschnitt (26) einen vom Gasgenerator (12) radial abstehenden, insbesondere umlaufenden Flansch (28) und wenigstens eine vom Gasgenerator (12) radial abstehende Befestigungslasche (30) umfasst, wobei die Befestigungslasche (30) zur Befestigung des Gasgenerators (12) am Träger (14) vorgesehen und die Luftsackhülle (16) zwischen dem Flansch (28) und dem Träger (14) eingeklemmt ist.

5. Luftsackmodul nach einem der vorangehenden Ansprüche,
**dadurch gekennzeichnet,**
**dass** der Durchmesser des Halterings (20) größer ist als der Durchmesser der Öffnung (44) im Träger (14).

6. Luftsackmodul nach einem der vorangehenden Ansprüche,
**dadurch gekennzeichnet,**
**dass** der Haltering (20) aus Kunststoff gefertigt ist.

7. Luftsackmodul nach einem der vorangehenden Ansprüche,
**dadurch gekennzeichnet,**
**dass** der Haltering (20) in die Luftsackhülle (16) eingenäht und/oder eingestülpt ist.

8. Luftsackmodul nach einem der vorangehenden Ansprüche,
**dadurch gekennzeichnet,**
**dass** ein mit dem Träger (14) zusammenwirkendes Positionierelement (24) in eine axiale Richtung und ein mit dem Gasgenerator (12) zusammenwirkendes Positionierelement (22) in die entgegengesetzte axiale Richtung weist.

9. Luftsackmodul nach einem der vorangehenden Ansprüche,
**dadurch gekennzeichnet,**
**dass** eine am Gasgenerator (12) ausgebildete Aussparung (34) für das Positionierelement (22) eine zum Verbinden des Gasgenerators (12) mit dem Träger (14) dienende Verstellbewegung des Gasgenerators (12) relativ zu dem Positionierelement (22) zulässt und vorzugsweise als Langloch (34) ausgebildet ist.

10. Luftsackmodul nach einem der vorhergehenden Ansprüche,
**dadurch gekennzeichnet,**
**dass** eine Rastvorrichtung (58) vorgesehen ist, die bei korrekt zusammengesetztem Modul den Gasgenerator (12) in einer mit dem Träger (14) verbundenen Endstellung sichert.

11. Luftsackmodul nach Anspruch 10,
**dadurch gekennzeichnet,**
**dass** die Rastvorrichtung (58) zumindest ein am Träger (14) angebrachtes Rastelement (48), insbesondere eine Balkenfeder, und eine im Befestigungsabschnitt (26) des Gasgenerators (12) ausgebildete Rastöffnung (36) umfasst, in die bei korrekt zusammengesetztem Modul das Rastelement (48) eingerastet ist.

12. Luftsackmodul nach einem der vorhergehenden Ansprüche,
**dadurch gekennzeichnet,**
**dass** der Gasgenerator (12) durch die Rückstellkraft wenigstens eines Federelementes (50) des Trägers (14) spielfrei gehalten ist, das bei mit dem Träger (14) verbundenem Gasgenerator (12) durch den Gasgenerator (12) ausgelenkt ist.

13. Luftsackmodul nach einem der vorhergehenden Ansprüche,
**dadurch gekennzeichnet,**
**dass** der Träger (14) aus Kunststoff gefertigt ist.

## Claims

1. Airbag module for motor vehicles, which comprises an airbag (10) with an airbag envelope (16) that has an inflation opening (18), and further comprises a gas generator (12) and a carrier (14) to hold the airbag (10) and the gas generator (12),
in which when the module is assembled the gas generator (12) is connected with the carrier (14) by at least one fastening section (26) that projects beyond an opening (44) provided in the carrier (14), with the edge region of the airbag envelope (16) that limits the inflation opening (18) being attached to a retaining ring (20) that is clamped between the fastening section (26) of the gas generator (12) and the carrier (14),
whereby the gas generator (12) can be moved by rotary motion from a predetermined initial position aligned with the carrier (14) to an end position connected to the carrier (14), **characterised in that**
the retaining ring (20) is part of at least one positioning aid (54, 56) for the correct aligning of the carrier (14) and/or of the gas generator (12) relative to the airbag (10), whereby the positioning aid comprises at least one particularly pin-like positioning element (22, 24) configured on the retaining ring (20) and at least one cutout (34, 52) configured on the carrier (14) and/or gas generator (12) in which the positioning element (22, 24) engages when correctly aligned.

2. Airbag module according to Claim 1,
**characterised in that**
the gas generator (12) is connected to the carrier (14) by the fastening section (26) in the manner of a bayonet closure, snap closure and/or detent closure.

3. Airbag module according to any of the preceding claims, **characterised in that** the gas generator (12) is partly passed through the opening (44) in the carrier (14).

4. Airbag module according to any of the preceding claims,
**characterised in that**
the fastening section (26) comprises an in particular circumferential flange (28) projecting radially away from the gas generator (12), and at least one fastening lug (30) projecting radially away from the gas generator (12), with the fastening lug (30) being provided for fastening the gas generator (12) to the carrier (14) and the airbag envelope (16) being clamped between the flange (28) and the carrier (14).

5. Airbag module according to any of the preceding claims,
**characterised in that**
the diameter of the retaining ring (20) is greater than the diameter of the opening (44) in the carrier (14).

6. Airbag module according to any of the preceding claims,
**characterised in that**
the retaining ring (20) is made of plastic.

7. Airbag module according to any of the preceding claims,
**characterised in that**
the retaining ring (20) is sewn into and/or pressed into the airbag envelope (16).

8. Airbag module according to any of the preceding claims,
**characterised in that**
a positioning element (24) interacting with the carrier (14) points in one axial direction and a positioning element (22) interacting with the gas generator (12) points in the opposite axial direction.

9. Airbag module according to any of the preceding claims,
**characterised in that**
a cutout (34) configured for the positioning element (22) on the gas generator (12) allows an adjusting motion of the gas generator (12) relative to the positioning element (22), said adjusting motion serving to connect the gas generator (12) with the carrier (14), and is preferably configured as a slot (34).

10. Airbag module according to any of the preceding claims,
**characterised in that**
a detent device (58) is provided which when the module is correctly assembled secures the gas generator (12) in an end position connected to the carrier (14).

11. Airbag module according to Claim 10,
**characterised in that**
the detent device (58) comprises at least one detent element (48) attached to the carrier (14), in particular a bar spring, and one detent opening (36) configured in the fastening section (26) of the gas generator (12) into which the detent element (48) engages when the module is correctly assembled.

12. Airbag module according to any of the preceding claims,
**characterised in that**
the gas generator (12) is held without play by the restoring force of at least one spring element (50) of the carrier (14) that is deflected by the gas generator (12) when the gas generator (12) is connected to the carrier (14).

13. Airbag module according to any of the aforementioned claims,
**characterised in that**
the carrier (14) is made from plastic.

## Revendications

1. Module d'airbag pour véhicules automobiles qui comporte un airbag (10) doté d'une enveloppe d'airbag (16) présentant un orifice d'insufflation (18), un générateur de gaz (12) et un support (14) pour la fixation de l'airbag (10) et du générateur de gaz (12),
en cas de module assemblé, le générateur de gaz (12) étant relié au support (14) par au moins une section de fixation (26) dépassant au-delà d'une ouverture (44) réalisée dans le support (14), la zone de bord délimitant l'orifice d'insufflation (18) de l'enveloppe d'airbag (16) étant montée sur un anneau de retenue (20) qui est serré entre la section de fixation (26) du générateur de gaz (12) et le support (14),
le générateur de gaz (12) pouvant être transféré d'une position de départ prescrite, orientée avec le support (14), par un mouvement de rotation dans une position finale reliée au support (14),
**caractérisé en ce que** l'anneau de retenue (20) fait partie au moins d'une aide au positionnement (54, 56) destinée à orienter correctement le support (14) et/ou le générateur de gaz (12) par rapport à l'airbag (10), l'aide au positionnement comportant au moins un élément de positionnement (22, 24) en particulier de type cheville, réalisé sur l'anneau de retenue (20) et au moins un évidement (34, 52) réalisé sur le support (14) et/ou le générateur de gaz (12), dans lequel s'engage l'élément de positionnement (22, 24) en cas d'orientation correcte.

2. Module d'airbag selon la revendication 1, **caractérisé en ce que** le générateur de gaz (12) est relié par la section de fixation (26) au support (14) à la manière d'une fermeture à baïonnette, à ressort et/ou à crans.

3. Module d'airbag selon l'une quelconque des revendications précédentes, **caractérisé en ce que** le générateur de gaz (12) traverse en partie l'ouverture (44) dans le support (14).

4. Module d'airbag selon l'une quelconque des revendications précédentes, **caractérisé en ce que** la section de fixation (26) comporte une bride (28) en particulier périphérique, éloignée radialement du générateur de gaz (12) et au moins une languette de fixation (30) éloignée radialement du générateur de gaz (12), la languette de fixation (30) étant prévue pour la fixation du générateur de gaz (12) sur le support (14) et l'enveloppe d'airbag (16) étant serrée entre la bride (28) et le support (14).

5. Module d'airbag selon l'une quelconque des revendications précédentes, **caractérisé en ce que** le diamètre de l'anneau de retenue (20) est supérieur au diamètre de l'ouverture (44) dans le support (14).

6. Module d'airbag selon l'une quelconque des revendications précédentes, **caractérisé en ce que** l'anneau de retenue (20) est fabriqué en plastique.

7. Module d'airbag selon l'une quelconque des revendications précédentes, **caractérisé en ce que** l'anneau de retenue (20) est cousu et/ou recouvert dans l'enveloppe d'airbag (16).

8. Module d'airbag selon l'une quelconque des revendications précédentes, **caractérisé en ce qu'**un élément de positionnement (24) coagissant avec le support (14) est dirigé dans un sens axial et **en ce qu'**un élément de positionnement (22) coagissant avec le générateur de gaz (12) est dirigé dans le sens axial opposé.

9. Module d'airbag selon l'une quelconque des revendications précédentes, **caractérisé en ce qu'**un évidement (34) réalisé sur le générateur de gaz (12) pour l'élément de positionnement (22) autorise un mouvement de réglage du générateur de gaz (12) servant de liaison entre le générateur de gaz (12) et le support (14) par rapport à l'élément de positionnement (22) et est réalisé de préférence comme un trou oblong (34).

10. Module d'airbag selon l'une quelconque des revendications précédentes, **caractérisé en ce qu'**un dispositif d'encliquetage (58) est prévu, lequel bloque, en cas de module correctement assemblé, le générateur de gaz (12) dans une position finale reliée au support (14).

11. Module d'airbag selon la revendication 10, **caractérisé en ce que** le dispositif d'encliquetage (58) comporte au moins un élément d'encliquetage (48) monté sur le support (14), en particulier un ressort sur barre, et une ouverture d'encliquetage (36) réalisée dans la section de fixation (26) du générateur de gaz (12), dans laquelle l'élément d'encliquetage (48) est encliqueté en cas de module correctement assemblé.

12. Module d'airbag selon l'une quelconque des revendications précédentes, **caractérisé en ce que** le générateur de gaz (12) est maintenu sans jeu par la force de rappel au moins d'un élément de ressort (50) du support (14) qui est dévié par le générateur de gaz (12) lorsque celui-ci est relié au support (14).

13. Module d'airbag selon l'une quelconque des revendications précédentes, **caractérisé en ce que** le support (14) est fabriqué en plastique.
